# FASCICULE DE BREVET EUROPEEN

(11) **EP 2 694 786 B1**
(45) Date de publication et mention de la délivrance du brevet: **04.03.2015**
(21) Numéro de dépôt: 12717377.1
(22) Date de dépôt: 26.03.2012
(51) Int. Cl.: F01N 11/00, F01N 3/20

(54) **PROCÉDÉ DE DÉTERMINATION DE LA DURÉE D'OUVERTURE D'UN ORIFICE**
VERFAHREN ZUR BESTIMMUNG DER ÖFFNUNGSDAUER EINER ÖFFNUNG
METHOD FOR DETERMINING THE OPENING DURATION OF AN ORIFICE

(30) Priorité: 07.04.2011 FR 1153009
(43) Date de publication de la demande: 12.02.2014
(73) Titulaire: Peugeot Citroën Automobiles SA, 78140 Vélizy Villacoublay (FR)
(72) Inventeur: DUBOIS, Vincent, F-92200 Neuilly Sur Seine (FR); MASSOT, Guillaume, F-75015 Paris (FR); LALLIARD, Eric, F-78420 Carrieres Sur Seine (FR)
(86) Numéro de dépôt international: PCT/FR2012/050620
(87) Numéro de publication internationale: WO 2012/168594

(56) Documents cités:
- DE-A1-102008 034 223
- GB-A- 2 454 348

## Description

La présente invention concerne un procédé de détermination de la durée d'ouverture d'un orifice séparant deux espaces comprenant un fluide à des pressions différentes. L'invention s'applique tout particulièrement à la détermination de la durée d'ouverture de l'orifice d'une vanne d'un dispositif de catalyse du type SCR des gaz d'échappement d'un moteur thermique; un agent catalyseur, tel que de l'ammoniac gazeux ou de l'urée, étant injecté à travers ledit orifice En contrôlant la durée d'ouverture de l'orifice, on peut donc contrôler la quantité d'agent catalyseur injectée.

Différentes techniques ont déjà été proposées, ou sont déjà utilisées, pour réduire les émissions d'éléments polluants rejetés dans l'atmosphère avec les gaz d'échappement des véhicules automobiles munis d'un moteur thermique. C'est notamment le cas des émissions d'oxydes d'azote NOx qui sont traitées par réduction catalytique. A cette fin, une technique consiste à mélanger un agent réducteur, notamment de l'ammoniac gazeux, avec les gaz d'échappement et de faire passer le mélange dans ou sur un catalyseur placé dans la ligne d'échappement .Cette technique est connue sous l'abréviation anglaise SCR (pour Selective Catalytic Reduction). Il faut donc disposer dans la ligne d'échappement un injecteur d'ammoniac gazeux et un catalyseur. Le catalyseur peut avoir été déposé, par imprégnation par exemple, sur les parois des canaux d'un bloc de céramique composé d'une multitude de canaux sensiblement parallèles à la direction d'écoulement des gaz d'échappement. L'agent réducteur transforme les oxydes d'azote en azote et en eau. Lorsque l'agent réducteur est de l'ammoniac NH₃ la réaction est la suivante:

4NO+4NH₃+O₂ → 4N₂+6H₂O

Selon une autre forme de mise en oeuvre de cette technique, on injecte une solution d'urée (et donc un liquide), laquelle est transformée en ammoniac sous l'effet de la chaleur des gaz d'échappement.

Le catalyseur doit idéalement recevoir une quantité d'ammoniac qui est dans les proportions stoechiométriques pour la réaction d'oxydation. Il est donc important de maitriser l'injection d'ammoniac (ou d'urée) de façon à obtenir un débit d'ammoniac correspondant sensiblement aux proportions stoechiométriques.

La demande de brevet US 2004/0045284 A1 concerne un procédé et un dispositif d'injection d'un agent réducteur dans une ligne d'échappement d'un véhicule muni d'un système de catalyse SCR. Le dispositif comporte un réservoir pour le stockage de l'agent réducteur, fermé par une vanne de sécurité, et un dispositif de mesure ("metering device") placé dans une ligne d'injection. Un capteur de pression est placé dans la conduite reliant le réservoir contenant l'agent réducteur au dispositif de mesure. Le capteur de pression est utilisé pour surveiller la pression du système ou, lorsque l'agent réducteur est sous forme liquide, pour corriger la quantité d'agent liquide délivré par le réservoir en fonction de la pression. Le dispositif de mesure comporte des parois creuses qui permettent de refroidir le dispositif de mesure en faisant circuler un liquide de refroidissement à l'intérieur des parois. Le procédé décrit ne permet pas de contrôler précisément la quantité d'agent réducteur injecté dans la ligne d'échappement.

La demande de brevet US 2007/0163245 A1 concerne un système catalytique de type SCR comportant une unité de dosage de la quantité d'agent réducteur injectée. Cette unité ne présente pas de caractéristique particulière.

La demande de brevet US 2001/0053342 A1 concerne un système catalyseur de type SCR muni d'une unité de mesure de l'ammoniac injecté. Cette dernière comporte "par exemple, un tube de mesure avec un écran" ("an ammonia metering station 15, for example, a metering tube with a screen").

La demande de brevet GB 2 454 348 A divulgue un procédé suivant le préambule de la revendication 1.

Ces demandes de brevet ne proposent pas de solutions pour contrôler avec précision la quantité d'agent réducteur injectée dans la ligne d'échappement.

La présente invention concerne un procédé de détermination de la durée d'ouverture d'un orifice séparant deux espaces comprenant un fluide à des pressions différentes, ladite durée d'ouverture pouvant par exemple permettre de contrôler la quantité d'agent réducteur injecté dans un système catalytique de type SCR.

De façon plus précise, l'invention concerne un procédé de détermination de la durée d'ouverture d'un orifice (orifice d'une électrovanne par exemple) séparant deux espaces comprenant un fluide à des pressions différentes. Selon l'invention, la pression dans l'un desdits espaces est mesurée en fonction du temps et on détermine les variations d'une caractéristique découlant de la mesure de pression, ledit temps d'ouverture étant déterminé à partir desdites variations de ladite caractéristique. Cette dernière peut être avantageusement la dérivée de la pression, et dans ce cas on mesure l'intervalle de temps séparant deux changements rapides successifs de ladite dérivée. Ledit intervalle correspond alors audit temps d'ouverture de l'orifice.

Ladite caractéristique peut aussi être l'accélération de la pression et, dans ce cas, on mesure l'intervalle de temps séparant deux pics successifs d'accélération. Ledit intervalle correspond alors audit temps d'ouverture.

Avantageusement, on peut mesurer l'intervalle de temps séparant l'instant de la commande de fermeture dudit orifice de l'instant d'apparition du premier desdits changements rapides ou desdits pics d'accélération.

La mesure de pression peut être effectuée à l'aide d'un capteur situé, de préférence, dans celui desdits espaces qui a la pression la plus élevée.

Le procédé de l'invention peut être avantageusement utilisé pour la mesure du temps d'ouverture de l'orifice de l'unité de dosage d'un dispositif de catalyse d'un véhicule muni d'un moteur thermique, ledit dispositif comportant un réservoir de stockage d'un agent catalyseur (tel que de l'ammoniac gazeux), un système de catalyse (par exemple de type SCR) et ledit orifice lequel sépare ledit système de catalyse dudit réservoir.

D'autres avantages et caractéristiques de l'invention apparaîtront au cours de la description qui suit de plusieurs modes de réalisation de l'invention, donnés à titre d'exemples non limitatifs, en référence aux dessins annexés et sur lesquels :
- la figure 1 montre schématiquement une ligne d'échappement d'un moteur thermique muni d'un système de catalyse de type SCR;
- les figures 2a, 2b, 2c et 3a, 3b, 3c illustrent le procédé de l'invention en utilisant un capteur de pression situé respectivement en amont (figures 2) et en aval (figures 3) de l'orifice à travers lequel un agent réducteur est injecté.

Les dessins annexés pourront non seulement servir à compléter l'invention, mais aussi contribuer à sa définition, le cas échéant.

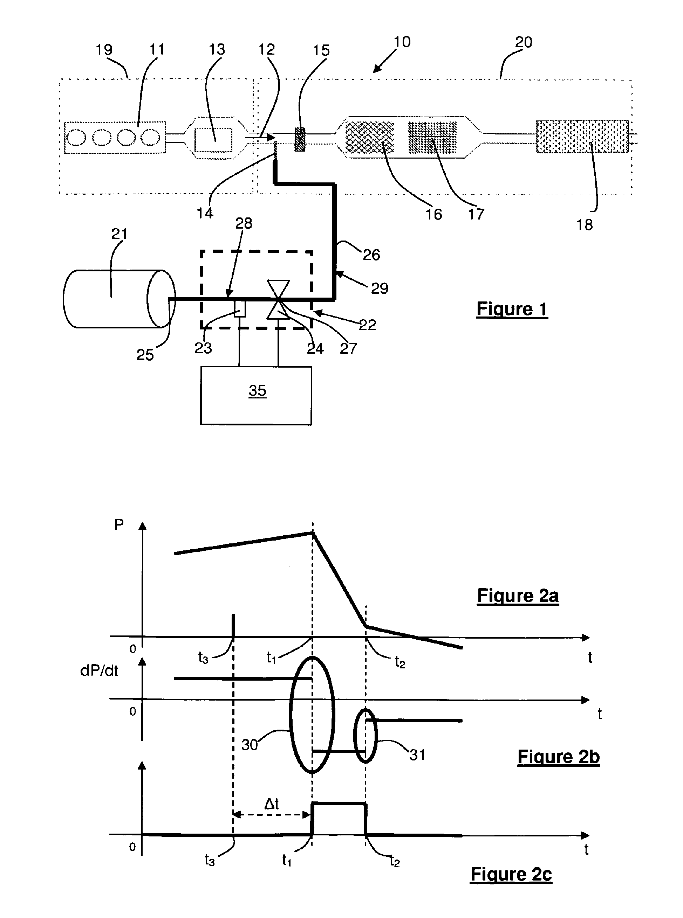

Sur la figure 1, l'architecture représentée correspond à la ligne d'échappement 10 d'un moteur Diesel 11. La ligne d'échappement comporte successivement, dans le sens d'écoulement des gaz d'échappement représenté par la flèche 12, un catalyseur à oxydation 13(désigné habituellement par l'abréviation DOC), un injecteur 14 d'agent réducteur (qui dans le cas de la présente invention est sous forme gazeuse), un mélangeur 15 pour réaliser un mélange homogène de l'agent réducteur avec les gaz d'échappement, un catalyseur 16 de type Réduction Catalytique Sélective ("SCR", pour "Selective Catalytic Reduction" en anglais) suivi d'un filtre à particules (FAP) 17 et enfin un pot d'échappement ou silencieux 18. L'injecteur 14 est bien entendu placé en amont du catalyseur 16 et le mélangeur 15 est placé entre l'injecteur 14 et le catalyseur 16. De plus, la ligne d'échappement comporte différents capteurs (non représentés), par exemple un capteur de pression différentielle entre l'entrée et la sortie du filtre à particules pour contrôler le fonctionnement du filtre et/ou un détecteur d'oxydes d'azote pour vérifier l'efficacité du catalyseur à réduction catalytique.

Les éléments contenus dans la partie encadrée 19 sont situés dans le compartiment moteur, souvent à l'avant du véhicule, alors que les éléments compris dans le cadre 20 sont localisés sous la caisse du véhicule. D'autres architectures connues peuvent bien entendu être utilisées.

Le système d'injection de l'agent catalyseur comporte un réservoir de stockage 21 comportant l'agent réducteur, par exemple sous forme gazeuse, de l'ammoniac NH₃ par exemple. Selon un autre mode de stockage, l'ammoniac peut être stocké par absorption dans un sel, du strontium par exemple, l'ammoniac étant désorbé sous forme gazeuse en chauffant le sel, soit directement, soit en chauffant le réservoir. Entre le réservoir 21 et l'injecteur 14 est placé une unité 22 de dosage de l'agent réducteur. Cette unité comporte un capteur de pression 23 suivi par une vanne 24, par exemple une électrovanne. Selon un autre mode de réalisation, le capteur de pression 23 peut être situé en aval de la vanne 24. L'agent réducteur, émis à la sortie 25 du réservoir 21, est acheminé vers le capteur de pression 23, la vanne 24 puis l'injecteur 14 par une canalisation 26, dont une partie 28 est située en amont de la vanne 24 et une autre partie 29 située en aval de la vanne 24. L'agent réducteur peut passer à travers l'orifice 27 d'ouverture/fermeture de la vanne 24, la pression en amont de la vanne (dans l'espace 28) étant supérieure à la pression en aval de celle-ci (dans l'espace 29) lorsque l'orifice 27 de la vanne est fermé.

Un des enjeux principaux des systèmes SCR est la maitrise de la quantité de gaz injectée dans la ligne d'échappement par l'unité de dosage 22, et donc la quantité de gaz fournie à l'injecteur 14. La présente invention propose un procédé permettant de contrôler précisément la quantité de gaz passant à travers un orifice séparant deux espaces à des pressions différentes, et plus spécifiquement à travers l'orifice 24 séparant un espace 28 situé en amont de la vanne 24 d'un espace 29 situé en aval de la vanne 24, en déterminant avec précision la durée d'ouverture de l'orifice

Selon l'invention, la durée d'ouverture est déterminée en mesurant, en fonction du temps t, la pression P à l'aide du capteur de pression 23 et en utilisant une caractéristique découlant de la mesure de pression. Cette caractéristique peut être, de préférence, la dérivée dP/dt en fonction du temps t de la pression P ou encore l'accélération de la pression. On pourrait aussi mesurer le gradient de pression et déclarer que lorsque la valeur du gradient atteint un seuil prédéterminé, il s'agit de l'ouverture ou de la fermeture de la vanne.

Le pilotage et le contrôle de l'unité de dosage 22 sont effectués à l'aide d'un contrôleur 35, par exemple le contrôleur de fonctionnement du moteur.

La pression en amont de l'orifice de la vanne est supérieure à la pression en aval (l'amont correspond à l'endroit de stockage de l'agent réducteur, donc au réservoir 21 et à la partie 28, et l'aval correspond à l'endroit où est amené une quantité dosée de cet agent, donc à la partie 29). L'ouverture de l'orifice 27 entraine l'établissement d'un débit d'agent réducteur de l'amont vers l'aval de la vanne.

La figure 2a représente l'évolution de la pression P, mesurée en fonction du temps t en amont de la vanne 24 à l'aide du capteur 23. La pression P varie de façon relativement constante jusqu'à l'instant t₁ où l'orifice 27 de la vanne est ouvert. La pression P décroit alors jusqu'à l'instant t₂ qui correspond à la fermeture de l'orifice 27. A partir de t₂, la pression varie de façon relativement constante.

La figure 2b représente la dérivée dP/dt de la pression P en fonction du temps t. La dérivée est stable jusqu'à l'instant t₁ d'ouverture de l'orifice 27. A cet instant t₁, la valeur de la dérivée chute brusquement (encadré 30) pour se stabiliser à une certaine valeur, jusqu'à l'instant t₂ de fermeture de l'orifice 27 A cet instant, la valeur de la dérivée croit brusquement (encadré 31).En se basant sur les variations rapides de la dérivée (figure 2b), la durée d'ouverture (figure 2c), différence entre les temps t₂ et t₁, peut être facilement déterminée avec précision, grâce aux changements très nets et brusques de la valeur de la dérivée aux instants t₁ et t₂.

Il peut être intéressant de connaitre avec précision l'intervalle de temps Δt séparant l'instant t₃ de la commande de l'ouverture de la vanne de l'instant t₁ d'ouverture de la vanne Cet intervalle Δt se mesure facilement avec le graphe de la figure 2c.

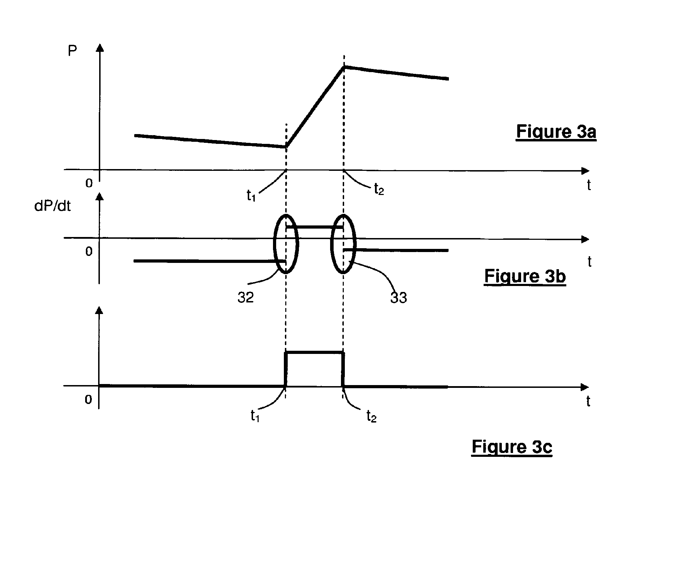

La figure 3 illustre le procédé de l'invention lorsque la pression P est mesurée en aval de l'orifice 27. Sur la figure 3a, la pression P décroit faiblement mais de façon relativement constante en fonction du temps t jusqu'à l'instant t₁ d'ouverture de l'orifice de la vanne. A cet instant, la pression P augmente de façon sensiblement constante jusqu'à l'instant t₂ de fermeture de l'orifice. La dérivée dP/dt est représentée sur la figure 3b. Comme précédemment, on remarque que jusqu'au temps t₁, la dérivée est relativement constante et qu'elle varie brusquement à l'ouverture (encadré 32) et à la fermeture (encadré 33) de la vanne. Les temps t₁ et t₂ respectivement d'ouverture et de fermeture de la vanne peuvent ainsi être déterminés avec précision. La durée d'ouverture est égale à la différence des temps t₂ et t₁ (figure 3c). Lorsque le procédé est utilisé pour déterminer précisément la quantité d'agent réducteur injectée dans la ligne d'échappement, la détermination de la durée d'ouverture de l'orifice de la vanne permet d'atteindre ce but.

Au lieu de la dérivée, on peut aussi utiliser l'accélération de la pression. L'utilisation de la dérivée est cependant préférée car en pratique le signal de l'accélération est relativement plus bruité que le signal de dérivée. Avec l'accélération il est nécessaire d'extraire du bruit les variations brutales de l'accélération qui se traduisent par des pics d'accélération. On extrait alors du signal d'accélération deux pics successifs.

Appliquée à un système de catalyse de type SCR, l'invention permet d'ajuster avec précision la quantité d'agent réducteur injectée, tout en ne nécessitant aucun capteur supplémentaire car l'information pression est déjà nécessaire au système pour compenser les dispersions et le vieillissement des composants du système, notamment de l'unité de dosage. Ainsi il n'y a pas le surcout d'un capteur de pression supplémentaire.

## Revendications

1. Procédé de détermination de la durée d'ouverture (t₂-t₁) d'un orifice (27) séparant deux espaces (28, 29) comprenant un fluide à des pressions différentes, la pression (P) dans l'un desdits espaces étant mesurée en fonction du temps (t), le procédé étant **caractérisé en ce que** l'on détermine les variations d'une caractéristique découlant de la mesure de pression, ledit temps d'ouverture étant déterminé à partir desdites variations de ladite caractéristique.

2. Procédé selon la revendication 1 **caractérisé en ce que** ladite caractéristique est la dérivée (dP/dt) de ladite pression (P).

3. Procédé selon la revendication 1 **caractérisé en ce que** ladite caractéristique est l'accélération de ladite pression (P).

4. Procédé selon la revendication 2 **caractérisé en ce que** l'on mesure l'intervalle de temps (t₂-t₁) séparant deux changements rapides successifs (30, 31) de ladite dérivée, ledit intervalle correspondant audit temps d'ouverture.

5. Procédé selon la revendication 3 **caractérisé en ce que** l'on mesure l'intervalle de temps séparant deux pics successifs d'accélération, ledit intervalle correspondant audit temps d'ouverture.

6. Procédé selon l'une des revendications précédentes **caractérisé en ce que** ledit orifice (27) est l'orifice d'une électrovanne (24).

7. Procédé selon la revendication 4 **caractérisé en ce que** l'on mesure l'intervalle de temps (Δt) séparant l'instant (t₃) de la commande de fermeture dudit orifice de l'instant d'apparition (t₁)du premier desdits changements rapides

8. Procédé selon la revendication 5 **caractérisé en ce que** l'on mesure l'intervalle de temps séparant l'instant de la commande de fermeture dudit orifice de l'instant d'apparition du premier desdits pics d'accélération.

9. Procédé selon l'une des revendications précédentes **caractérisé en ce que** ladite mesure de pression (P) est effectuée à l'aide d'un capteur (23) situé dans celui (28) desdits espaces qui a la pression la plus élevée.

10. Procédé selon l'une des revendications précédentes **caractérisé en ce que** ledit fluide est un gaz.

11. Application du procédé défini dans l'une des revendications précédentes pour mesurer le temps d'ouverture de l'orifice (27) de l'unité de dosage (22) d'un dispositif de catalyse d'un véhicule muni d'un moteur thermique (11), ledit dispositif comportant un réservoir (21) de stockage d'un agent catalyseur gazeux, un système de catalyse (24, 26, 14, 16) et ledit orifice (27) lequel sépare ledit système de catalyse dudit réservoir.

12. Application selon la revendication 11 **caractérisé en ce que** ledit dispositif est un catalyseur (16) de type SCR.

13. Application selon la revendication 12 **caractérisé en ce que** ledit agent réducteur gazeux est de l'ammoniac.

## Patentansprüche

1. Verfahren zur Bestimmung der Öffnungsdauer (t₂-t₁) einer Öffnung (27), die zwei Räume (28, 29) trennt, die ein Fluid mit unterschiedlichen Drücken enthalten, wobei der Druck (P) in einem der Räume in Abhängigkeit von der Zeit (t) gemessen wird, und Verfahren **dadurch gekennzeichnet, dass** man die Variationen eines Merkmals bestimmt, das sich aus der Druckmessung ergibt, wobei die Öffnungsdauer ausgehend von den Variationen des Merkmals bestimmt wird.

2. Verfahren nach Anspruch 1, **dadurch gekennzeichnet, dass** das Merkmal das Differenzial (dP/dt) des Drucks (P) ist.

3. Verfahren nach Anspruch 1, **dadurch gekennzeichnet, dass** das Merkmal die Beschleunigung des Drucks (P) ist.

4. Verfahren nach Anspruch 2, **dadurch gekennzeichnet, dass** man das Zeitintervall (t₂-t₁) misst, das zwei aufeinanderfolgende schnelle Änderungen (30, 31) des Differenzials trennt, wobei das Intervall der Öffnungsdauer entspricht.

5. Verfahren nach Anspruch 3, **dadurch gekennzeichnet, dass** man das Zeitintervall misst, das zwei aufeinanderfolgende Beschleunigungsspitzen trennt, wobei das Intervall der Öffnungsdauer entspricht.

6. Verfahren nach einem der vorhergehenden Ansprüche, **dadurch gekennzeichnet, dass** die Öffnung (27) die Öffnung eines Magnetventils (24) ist.

7. Verfahren nach Anspruch 4, **dadurch gekennzeichnet, dass** man das Zeitintervall (Δt) misst, das den Zeitpunkt (t₃) des Schließbefehls der Öffnung von dem Zeitpunkt des Auftretens (t₁) der ersten schnellen Änderungen trennt.

8. Verfahren nach Anspruch 5, **dadurch gekennzeichnet, dass** man das Zeitintervall misst, das den Zeitpunkt des Schließbefehls der Öffnung von dem Zeitpunkt des Auftretens der ersten der Beschleunigungsspitzen trennt.

9. Verfahren nach einem der vorhergehenden Ansprüche, **dadurch gekennzeichnet, dass** die Druckmessung (P) mit Hilfe eines Fühlers (23) erfolgt, der sich in dem (28) der Räume, der den höheren Druck hat, befindet.

10. Verfahren nach einem der vorhergehenden Ansprüche, **dadurch gekennzeichnet, dass** das Fluid ein Gas ist.

11. Anwendung des in einem der vorhergehenden Ansprüche definierten Verfahrens zum Messen der Öffnungsdauer der Öffnung (27) der Dosiereinheit (22) einer Katalysatorvorrichtung eines Fahrzeugs, das mit einem Verbrennungsmotor (11) versehen ist, wobei die Vorrichtung einen Lagerbehälter (21) eines gasförmigen Katalysemittels, ein Katalysatorsystem (24, 26, 14, 16) und die Öffnung (27), die das Katalysatorsystem von dem Behälter trennt, aufweist.

12. Anwendung nach Anspruch 11, **dadurch gekennzeichnet, dass** die Vorrichtung ein Katalysator (16) des Typs SCR ist.

13. Anwendung nach Anspruch 12, **dadurch gekennzeichnet, dass** das gasförmige Reduktionsmittel Ammoniak ist.

## Claims

1. A method for determining the duration (t₂-t₁) for which an orifice (27) separating two spaces (28, 29) containing a fluid at different pressures is open, the pressure (P) in one of said spaces being measured as a function of the time (t), the method being **characterized in that** the variations of a characteristic stemming from the pressure measurement are determined, said opening time being determined on the basis of said variations in said characteristic.

2. The method according to claim 1, **characterized in that** said characteristic is the derivative (dP/dt) of said pressure (P).

3. The method according to claim 1, **characterized in that** said characteristic is the acceleration of said pressure (P).

4. The method according to claim 2, **characterized in that** the time interval (tᵣt_{d} separating two rapid successive changes (30, 31) of said derivative is measured, said interval corresponding to said opening time.

5. The method according to claim 3, **characterized in that** the time interval separating two successive acceleration peaks is measured, said interval corresponding to said opening time.

6. The method according to one of the preceding claims, **characterized in that** said orifice (27) is the orifice of a solenoid valve (24).

7. The method according to claim 4, **characterized in that** the time interval (out) separating the moment (t₃) of the closure command of said orifice from the moment of appearance (t₁) of the first of said rapid changes is measured.

8. The method according to claim 5, **characterized in that** the time interval separating the moment of the closure command of said orifice from the moment of appearance of the first of said acceleration peaks is measured.

9. The method according to one of the preceding claims, **characterized in that** the said measurement of pressure (P) is carried out by means of a sensor (23) situated in that (28) of the said spaces which has the highest pressure.

10. The method according to one of the preceding claims, **characterized in that** the said fluid is a gas.

11. An application of the method defined in one of the preceding claims for measuring the opening time of the orifice (27) of the dosage unit (22) of a catalysis device of a vehicle provided with a heat engine (11), said device comprising a reservoir (21) for storage of a gaseous catalyzing agent, a catalytic system (24, 26, 14, 16) and said orifice (27) which separates said catalytic system from said reservoir.

12. The application according to claim 11, **characterized in that** said device is a catalyzer (16) of the SCR type.

13. The application according to claim 12, **characterized in that** said gaseous reducing agent is ammonia.
